# EUROPEAN PATENT APPLICATION

(11) **EP 4 397 692 A1**
(43) Date of publication of application: **10.07.2024**
(21) Application number: 23213460.1
(22) Date of filing: 30.11.2023
(51) Int. Cl.: C08G 75/02, C08G 75/0204, C08G 75/0209, C08L 81/02, C09D 181/02, C09J 181/02

(54) **POLYMER COMPOSITION AND METHODS OF PREPARATION THEREOF**

(30) Priority: 02.12.2022 US 202263385844 P
(71) Applicant: Kraton Polymers Nederland B.V., 1322 CE Almere (NL)
(72) Inventor: TRUONG, Phuc, Houston, Texas 77032 (US); DHARMARAJAN, Narayanaswami, Houston, Texas 77032 (US); RAGHAVENDRAN, Venkatkrishna, Houston, Texas 77032 (US)
(74) Representative: Henkel & Partner mbB

(57) **Abstract**

The disclosure relates to an impact modified polyarylene sulfide composition containing epoxy functionalized styrenic block copolymer (e-SBC), for improved impact resistance with minimal impact on processability, wherein e-SBC is an epoxy functionalized unhydrogenated styrenic block copolymer (e-USBC), or an epoxy functionalized partially hydrogenated styrenic block copolymer (e-pHSBC), or an epoxy functionalized hydrogenated styrenic block copolymer (e-HSBC). The improved PPS composition can be used for making electronic components such as, but certainly not limited to, connectors, bobbins, coils, relays, etc.

## Description

### FIELD

The disclosure relates to a polyarylene sulfide polymer composition containing epoxy grafted partially hydrogenated styrenic block copolymer as an impact modifier, methods of preparation, and applications thereof.

### BACKGROUND

Polyarylene sulfide (interchangeably referred to as polyphenylene sulfide or PPS) polymers are high-performance engineering thermoplastics with properties including high heat resistance, flame resistance, chemical resistance, and excellent electrical insulation properties and dimensional stability. In the automotive industry, PPS is a lighter weight alternative to metal, and is resistant to corrosion by salts and automotive fluids. Under-the-hood is one of the largest application areas for PPS, e.g., fuel injection systems, coolant systems, pumps, thermostat holders, electric brakes, valves, etc. The thermal stability and broad chemical resistance of PPS is highly desirable in hostile chemical environment, which can be found in many heavy industrial applications such as oilfield, ventilation, and air conditioning (HVAC) equipment sector.

Glass-reinforced PPS grades are typically used in medical applications such as surgical parts and devices that require high dimensional stability, strength, and heat resistance. Unfilled PPS and glass-filled PPS resins are intrinsically brittle and require an impact modifier to impart toughness. Previous studies have examined SEBS, MA-g-SEBS, and ethylene-methyl acrylate-glycidyl methacrylate terpolymer (E-MA-GMA) for toughening PPS resins. Both SEBS and MA-g-SEBS do not impart sufficient toughness, while E-MA-GMA provides high impact strength at the expense of reduced processability. Formulations with E-MA-GMA as a modifier can increase viscosity both in unfiled and glass-filled PPS compounds, while compounds with SEBS or MA-g-SEBS do not typically exhibit increased viscosity.

There is a need for an improved impact modifier with balanced properties, including toughness, stiffness, and processability.

### SUMMARY

In one aspect, the disclosure relates to a polyphenylene sulfide composition comprising, consisting essentially of, or consists of: a) 60 to 98 wt. % of a polyphenylene sulfide and 2 to 40 wt. % of a first epoxidized styrenic block copolymer (e-SBC), wherein the epoxidized styrenic block copolymer is obtained by epoxidizing a styrenic block copolymer (SBC) precursor having a general configuration selected from A-B, A-B-A, A-B-A-B, (A-B-A)ₙX, (A-B)ₙX, and mixtures thereof. Each block A is at least one monoalkenyl arene polymer block and each block B is at least one conjugated diene polymer block, X is the residual of a coupling agent and n ≥ 1. the block B is epoxidized at aliphatic double bonds for the epoxidized styrenic block copolymer to have 1 to 35 wt.% of epoxy functional groups based on the weight of the block B. The first epoxidized styrenic block copolymer has a residual unsaturation (RU) of 0.05 - 20 mmol/g. The polymer composition further comprises 0 to 40 wt.% of an optional impact modifier, and up to 10 wt. % of at least an additive.

In another aspect, the styrenic block copolymer (SBC) precursor is hydrogenated to form a hydrogenated styrenic block copolymer precursor having a hydrogenation level of at least 97%.

In yet another aspect, the partially hydrogenated styrenic block copolymer precursor has a vinyl content of 6-80 %.

In still another aspect, the composition further comprises, a second epoxidized styrenic block copolymer (e-SBC), wherein the second e-SBC is different than the first e-SBC.

In one aspect, the first and second e-SBCs are formed from epoxidizing partially hydrogenated styrenic block copolymer precursors. In embodiments, at least one of the first and second epoxidized styrenic block copolymers (e-SBC), has a degree of epoxidation of 15-99 %.

### DESCRIPTION

The following terms will have the following meanings:

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, ..., or C" is to be interpreted as including A only, B only, C only, "A or B," "A or C," "B or C," or "A, B, or C."

"Block" as used herein refers to a section of a polymer molecule that comprises a plurality of constitutional units (monomers) and possesses at least one constitutional or configurative feature that does not appear in the immediately adjacent sections (blocks).

"Conjugated diene" refers to an organic compound containing conjugated carbon-carbon double bonds and a total of 4 to 12 carbon atoms, such as 4 to 8 carbon atoms, which can be any of 1,3-butadiene and substituted butadienes, including but not limited to 1,3 cyclohexadiene, isoprene, 2,3-dimethyl-1 ,3-butadiene, 1-phenyl-1,3-butadiene, 1,3-pentadiene, 3-butyl-1,3-octadiene, chloroprene, and piperylene, or any combination thereof. In embodiments, the conjugated diene block comprises a mixture of butadiene and isoprene monomers. In embodiments, 1,3-butadiene alone is used.

"Butadiene" refers to 1,3-butadiene.

"Monovinyl arene," or "monoalkenyl arene," or "vinyl aromatic" refers to an organic compound containing a single carbon-carbon double bond, at least one aromatic moiety, and a total of 8 to 18 carbon atoms, such as 8 to 12 carbon atoms. Examples include any of styrene, o-methyl styrene, p-methyl styrene, p-tertbutyl styrene, 2,4-dimethyl styrene, alpha-methyl styrene, vinyl naphthalene, vinyl toluene, vinyl xylene, or mixtures thereof. In embodiments, the monoalkenyl arene block comprises a substantially pure monoalkenyl arene monomer. In some embodiment, styrene is the major component with minor proportions (less than 10 wt. %) of structurally related vinyl aromatic monomers such as o-methylstyrene, p-methyl styrene, p-tert-butyl styrene, 2,4- dimethyl styrene, a-methylstyrene, vinyl naphtalene, vinyl toluene, vinyl xylene, or combinations thereof. In embodiments, styrene alone is used.

"Vinyl content" refers to the content of a conjugated diene that is polymerized via 1,2-addition in the case of butadiene, or via 3,4-addition in the case of isoprene, resulting in a monosubstituted olefin, or vinyl group, adjacent to the polymer backbone. Vinyl content can be measured by nuclear magnetic resonance spectrometry (NMR).

"Coupling efficiency," expressed as % CE, is calculated using the values of the wt. % of the coupled polymer and the wt. % of the uncoupled polymer. The wt. % of the coupled polymer and the uncoupled polymer can be determined using the output of a differential refractometer detector. The intensity of the signal at a specific elution volume is proportional to the amount of material of the molecular weight corresponding to a polystyrene standard detected at that elution volume.

"Coupling Agent" or "X" refers to the coupling agents commonly used in the making of styrenic block copolymers art, e.g., silane coupling agents such as isobutyl-trimethoxy silane, methyltrimethoxysilane; polyvinyl compounds, polyvinyl arene, di- or multi-vinylarene compounds; di- or multi-epoxides; di- or multi-isocyanates; di- or multi-alkoxysilanes; di- or multi-imines; di-or multi-aldehydes; di- or multi-ketones; alkoxy-tin compounds; di- or multi-halides, such as silicon halides and halosilanes; mono-, di-, or multi-anhydrides; di- or multi-esters; tin tetrachloride; tetramethyl orthosilicate.

"Polystyrene content" or PSC of a block copolymer refers to the % weight of vinyl aromatic, e.g., polystyrene in the block copolymer, calculated by dividing the sum of molecular weight of all vinyl aromatic blocks by the total molecular weight of the block copolymer. PSC can be determined using any suitable methodology such as proton nuclear magnetic resonance (1HNMR).

"Molecular weight" or MW refers to the styrene equivalent molecular weight in kg/mol of a polymer block or a block copolymer. MW can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. MW of polymers measured using GPC so calibrated are styrene equivalent molecular weights or apparent molecular weights. MW expressed herein is measured at the peak of the GPC trace and is commonly referred to as styrene equivalent "peak molecular weights," designated as Mₚ.

"Residual Unsaturation (RU)" refers to the level of unsaturation, i.e., carbon-carbon double bonds per gram of block copolymer. RU can be measured using nuclear magnetic resonance (1HNMR).

"Residual Unsaturation in rubber (RUrub)" refers to the levels of unsaturation, i.e., carbon-carbon double bonds per gram of block copolymer corrected for its aromatic content. It is calculated via the following equation: RUrub = RU * 100/(100-PSC). RUrub can be measured using nuclear magnetic resonance (1HNMR).

"Hydrogenation level" (H₂%) refers to the level of saturation of the olefinic double bonds into the block copolymer. It can be calculated using the following equation when producing the p-HSBC: H₂% = 100* (RU before hydrogenation - RU after hydrogenation) / RU before hydrogenation.

Polyphenylene sulfide or PPS is used interchangeably and refers to polyarylene sulfide or PAS.

Partial or partially hydrogenated styrenic block copolymer is used interchangeably with pHSBC.

"Rubber block" refers to a conjugated diene polymer block.

"Radial copolymer" refers to a branched copolymer having segments, or blocks of styrene and conjugated diene monomers.

Epoxidized p-HSBC (e-pHSBC), or epoxy-grafted p-HSBC, or epoxy-functionalized p-HSBC, are used interchangeably to refer to a composition where epoxy groups are grafted on the backbone or the vinyl group adjacent to the polymer backbone of a hydrogenated styrenic block copolymer (p-HSBC).

The disclosure relates to an impact modified polyphenylene sulfide (PPS) composition containing epoxy functionalized styrenic block copolymer (e-SBC), for improved impact resistance with minimal impact on processability, wherein SBC can be unhydrogenated, or hydrogenated for the e-SBC to be an epoxy functionalized hydrogenated styrenic block copolymer (e-HSBC) or epoxy functionalized partially hydrogenated styrenic block copolymer (e-pHSBC).

Polyphenylene sulfide (PPS): The PPS has > 70 mole %, or > 75 mole %, or > 85 mole %, or > 90 mole%, of recurring units represented by the structural formula,

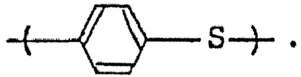

Polyphenylene sulfide (PPS) polymers include those having a relatively low molecular weight as disclosed in the U.S. Pat. No. 3,354,129; and those having relatively high molecular weight as disclosed in U.S. Pat. No. 3,919,177. The PPS may be linear or branched. Substantially linear PPS, having a relatively high molecular weight is preferred in applications requiring the toughness of the higher molecular weight PPS.

In embodiments, the PPS is a low molecular weight PPS ("LMWPPS"), having a number average molecular weight (MWₙ) of 2,000 - 10.000, or 5,000 - 9,000, or 7,000- 8,500 g/mol. In embodiments, the LMWPPS has a weight average molecular weight (MW_{w}) of 2,000 - 40.000, or 20,000 - 35,000, or 30,000 - 34,000 g/mol.

In embodiments, the PPS is a high molecular weight PPS ("HMWPPS") having a MWₙ of 11,000-100,000, or 25,000-50,000, or 27,000-35,000 g/mol. In embodiments, the HMWPPS has a MW_{w} of 55, 000- 150,000, or 80,000 - 120,000, or 85,000 - 100, 000 g/mol.

In embodiments, the PPS is filled / reinforced with materials such as glass or mineral fillers, in amounts of < 65 wt. %, or 10-50 wt. %, or 20-45 wt.% of the total weight of the PPS. Examples of fillers include minerals such as calcium carbonate, calcium sulfate, talc, mica, and the like. Examples of glass fillers include commercially available glass fillers, e.g., boron silicate glass or aluminum silicate glass, glass fibers, and glass beads as reinforcing agents for polymeric blends.

In embodiments, the amount of PPS in an impact modified PPS composition containing e-SBC ranges from 60-98 wt. %, or > 60 wt. %, or 65-95 wt.%, or < 98 wt. %, based on the total weight of the composition.

Epoxy Functionalized Styrenic Block Copolymer (e-SBC): The PPS composition further comprises an epoxy functionalized styrenic block copolymer (e-SBC). The e-SBC can be formed by epoxidizing or grafting an SBC precursor with an epoxidizing agent, wherein the unsaturated double bond of the conjugated diene in the SBC is epoxidized.

The SBC precursor or base polymer can be prepared by copolymerizing one or more olefins, including at least one conjugated diene, by themselves or with one or more monoalkenyl arene monomers. The copolymers may or may not be tapered, the individual blocks may be homopolymers or random copolymers, and the polymer molecule may be linear or branched.

In embodiments, the SBC precursor has a structure selected from the group of A-B, A-B-A, A-B-A-B, (A-B-A)ₙX, (A-B)ₙX, and mixtures thereof, wherein n is a positive integer, X is the residue of a coupling agent. Each block A is predominantly a polymer block of monoalkenyl arene monomers and each polymer block B is predominantly a polymer block of conjugated diene monomers. Standard analytical techniques including 1HNMR can be used to detect / analyze the e-SBC structure.

The designation of "n," refers to the number of "arms" or "branches" in each of the structures, with n ≥ 1. In embodiments, n ranges from 1-20, or 1-10, or 1-7.

In embodiments, each block A is selected from the group comprising, styrene, alpha-methyl styrene, methyl styrene, para-methyl styrene, ethyl styrene, propyl styrene, butyl styrene, tert-butyl styrene, dimethyl styrene, vinyl toluene, isomers of vinyl toluene, vinyl xylene, 1,1-vinyl biphenyl, vinyl naphthalene, vinyl anthracene, and mixtures thereof.

In embodiments, each block B is independently selected from the group consisting of polybutadiene, 1,3-butadiene, isoprene, 2,3-dimethyl-1,3-butadiene, 1-phenyl-1,3-butadiene, 1,3-pentadiene, 1,3-hexadiene, 3-butyl-1,3-octadiene, myrcene, farnesene, 1,3-cyclohexadiene, piperylene, and mixtures thereof. In embodiments, block B is selected from poly(isoprene-r-butadiene), poly(butadiene-r-styrene), wherein the -r- refers to a random copolymer, e.g., "poly(isoprene-r-butadiene)" means polyisoprene butadiene random copolymer.

In embodiments, the SBC precursor has an average 1,2-vinyl or 3,4-vinyl content of 6-80%, or 10-75%, or 15-45%, or 20-40 wt. %, or 25-35%, or >35%, or < 80%. Vinyl content can be measured before or after hydrogenation, via 1HNMR.

In embodiments, the SBC precursor is epoxidized (without being hydrogenated first) forming an epoxy functionalized (unhydrogenated) styrenic block copolymer (e-USBC). In other embodiments, the SBC precursor is first hydrogenated at a hydrogenation level of at least 97% before epoxidizing, forming an epoxy functionalized hydrogenated styrenic block copolymer (e-HSBC). In yet other embodiments, the SBC precursor is partially hydrogenated before epoxidation, forming an epoxy functionalized partially hydrogenated styrenic block copolymer (e-pHSBC).

In embodiments, the PPS composition comprises a mixture of different e-SBCs, e.g., a mixture of at least two different e-USBCs, or e-HSBCs or e-pHSBCs, or a mixture of e-USBC and e-pHSBC, or a mixture of e-HSBC and e-pHSBC, etc.

In embodiments, the PPS composition comprises a mixture of different e-pHSBC's, with one e-pHSBC formed from pHSBC having a low vinyl content and the other e-pHSBC formed from a pHSBC having a high vinyl content. Low vinyl content means the p-HSBC precursor having an average 1,2-vinyl or 3,4-vinyl content of < 50 %, or < 40 %, or < 38%, or < 35%, or < 30%, or < 25%, or < 20%, or < 15%. High vinyl content means the p-HSBC precursor having an average 1,2-vinyl or 3,4-vinyl content of> 50%, or > 55%, or > 60 %, or > 65%, or < 80%.

In embodiments, the molecular weight distribution of A block in the SBC precursor is in the range of 1-150 kg/mol styrene equivalent, or at least 120 kg/mol, or at least 130 kg/mol for the polymer block (S), and 8-20 kg/mol styrene equivalent, or 10-12 kg/mol, or at least 8.5 kg/mol, or at least 9.0 kg/mol for each of the polymer block (s).

In embodiments, each polymer block B has a molecular weight (Mp) of 2 - 350, or 5 - 300, or 7 - 250, or 10 - 200, or 5 - 150, or 3 - 100 kg/mol.

In embodiments, the SBC precursor has a Mw or Mp of 50 - 500 kg/mol, or 60 - 400 kg/mol, or 75-250 kg/mol, or < 400 kg/mol, or < 300 kg/mol, or < 200 kg/mol.

In embodiments, the SBC precursor independently has a total polystyrene content (PSC) prior to hydrogenation is 10-40 %, or > 10%, or > 20%, or > 25%, or < 45%.

In embodiments, the SBC precursor contains 5-70 wt.%, or 10-65 wt.%, or 15-60 wt. %, or 20-45 wt.%, or > 5 wt. %, or < 70 wt.% of the monoalkenyl arene compound, and from 30-95 wt. %, or 35-90 wt. %, 45-80 wt. %, or > 30 wt. %, or < 95 wt. % of the conjugated diene (in each case based on the total monomers employed), as copolymerized units.

In embodiments, the SBC precursor is fully hydrogenated, meaning the hydrogenated conjugated diene has a hydrogenation level of > 97%, or ≥ 98%, or < 99.5%, or 97.5-99.5%.

In embodiments, the SBC precursor is partially hydrogenated, meaning the hydrogenated conjugated diene has a hydrogenation level of 15-97%, or > 20%, or 30-95%, or > 40%, or < 70%, or < 80%, or < 97%. Hydrogenation level refers to the percentage of original unsaturated bonds which become saturated upon hydrogenation. Hydrogenation level in the vinyl aromatic polymers can be determined using UV-VIS spectrophotometry or proton NMR. Hydrogenation level in the diene polymers can be determined using 1HNMR.

In embodiments, the partially hydrogenated conjugated diene has a residual unsaturation or RU of < 20 mmol/g, or <15 mmol/g, or < 10 mmol/g, or < 8 mmol/g, or > 3 mmol/g, or < 5 mmol/g, or 2-15 mmol/g, or > 0.5 mmol/g. RU can be determined using 1HNMR.

In embodiments, the partially hydrogenated conjugated diene has a residual unsaturation in the non-aromatic fraction of the p-HSBC or RUrub of 2 to 14 mmol/g, or 3-12 mmol/g, or 4-10 mmol/g, or <14.5 mmol/g.

In embodiments, p-HSBC is epoxidized by generally known methods such as the use of a peracid exemplified by peracetic acid, hydrogen peroxide in the presence of acetic acid, and sulfuric acid or hydrogen peroxide in the presence of a low molecular weight fatty acid such as formic acid.

In embodiments, the peroxides used as functionalization / epoxidizing agent include per-carboxylic acids such as performic acid, peracetic acid, perpropionic acid, 3-chloroperoxybenzoic acid, potassium peroxymonosulfate, and mixtures thereof.

Epoxidation can be carried out by methods known in the art, as disclosed in US8927657B2. In embodiments, the production of epoxy functionalized p-HSBC comprises: a first step of epoxidizing a p-HSBC in the presence of an epoxidizing agent and a solvent for accelerating epoxidation reaction to produce an epoxidized p-HSBC (e-pHSBC), a second step involves washing with water, or the neutralization and washing with water. In the third step, the solvent, which is used for accelerating the epoxidation reaction in the first step is removed by evaporation under a vacuum to obtain e-pHSBC. Epoxidation reaction is carried out at a temperature of 10 to 70° C, or 15 - 55° C, or 40 - 50° C, and for a sufficient time to obtain the desired epoxidation level. The amount of the functionalization /epoxidizing agent added to p-HSBC varies based on the desired level of functionalization. Typically, this amount is in the range of 1 - 35, or 2 - 30, or 3 - 25, or 5 - 20, or 6 - 10 wt.%, based on the total weight of the rubber block and the epoxidizing agent.

In embodiments, e-pHSBC has a degree of epoxidation of up to 100, or 15 - 99, or 10 - 92, or 40 - 80, or > 50, or 55-95, or 60-85%, relative to the polymer block susceptible to functionalization.

In embodiments, the block B which is derived from conjugated diene monomer in e-SBC is epoxidized at aliphatic double bond. The amount of epoxy functional groups in e-SBC is from 0.05-20 mmol/g, or 0.1-15 mmol/g, or > 0.1 mmol/g, or 0.5-12 mmol/g, or 1-10 mmol/g, or 1.5- 8 mmol/g, or < 20 mmol/g, relative to per gram of the partially hydrogenated styrenic block copolymer. The amount of epoxy functional groups in e-SBC can be measured by titration or 1HNMR.

In embodiments, the e-SBC is present in an amount of 2-40 wt. %, or 5-38 wt. %, or 8-35 wt. %, or 10-40 wt. %, or 15-30 wt.%, or > 20 wt.% based on the total weight of the PPS composition.

Optional Additional Impact Modifiers: In addition to the e-SBC, in embodiments, the PPS composition further comprises an optional impact modifier, e.g., elastomeric copolymers such as ethylene-propylene diene polymers (EPDM's) that may be either unfunctionalized or functionalized with epoxy, anhydride, ortho-ester, oxazoline, sulfonate, or phosphonate groups, carboxylated ethylene-propylene rubbers, silicone rubber, ethylene-acrylic rubber, ethylene-propylene copolymer rubber, ethylene-propylene-diene terpolymer rubber, and poly(butyl acrylate), block copolymers of alkenyl-aromatic compounds, such as e.g., styrene, with polymerizable olefins or dienes, such as for example butadiene, isoprene, chloroprene, ethylene, propylene and butylene, core-shell polymers, and mixture thereof.

Examples of optional impact modifiers include other styrenic block copolymers, e.g., diblock, triblock, or radial copolymer with at least one block derived from styrene and at least one other block from at least one of butadiene and isoprene that may be either unfunctionalized or functionalized with epoxy, anhydride, ortho-ester, oxazoline, sulfonate, or phosphonate groups. Examples are triblock copolymers with polystyrene end blocks and diene-derived midblock.

In embodiments, optional impact modifier if present, is in an amount of up to 45 wt. %, 2-40 wt. %, or 5-25 wt. %, or 10-20 wt. %, based on the total weight of the PPS composition.

Optional Additives : In embodiments, the PPS composition further comprises an effective amount of at least one additive selected from the group consisting of flame retardants. drip retardants. dyes, pigments, colorants, stabilizers, antistatic agents, plasticizers, lubricants, mineral fillers, glass fillers, glass beads, etc.

In embodiments, the optional additives, if present, is used in minor amounts of up to 10 wt.%, or < 8 wt.%, or 0.1-5 wt. %, based on the total weight of the entire PPS composition.

Preparation of Impact Modified PPS Composition / Forming Articles: The composition can be prepared by mixing predetermined amounts of PPS resin, e-SBC, optional impact modifier, and optional components if any by means of known processing equipment, e.g., a mixer, or by melt-kneading by means of an extruder or kneader, and, if necessary, by compounding / making into pellets for further processing for molded articles.

Once made, the PPS composition can be used to make articles via known methods, e.g., injection molding, blow molding, or extrusion, or other known means.

Applications: The improved PPS composition can be used to form articles such as electronic components, e.g., connectors, bobbins, coils, relays, etc. Other applications include but are not limited to automotive under-hood parts, automotive fuel lines, switches and brushes, electrical fittings, thermal devices, appliance motor parts, computer parts, fax gears, and guards, pumps, and housings. Other uses exist in, for example, aerospace, military, recreational vehicles, electronics, and electrical applications.

Properties of PPS Composition: In embodiment, a PPS composition containing 60 - 98 wt. % of PPS, 2 - 40 wt. % of e-SBC as an impact modifier, up to 40 wt.% of an optional impact modifier, and up to 10 wt.% of at least an additive, exhibits balanced properties, including toughness, stiffness and processability for use in high-performance applications. In embodiments, the PPS composition has one or more or all of the following properties:

Tensile strength at break of 20- 150 MPa, or <150 MPa, or 30-120 MPa, or 40-100 MPa, or 45-95 MPa, or 55-80 MPa, measured in accordance with ASTM D638.

Tensile strength at yield 20-150 MPa, or <150 MPa, or 30-120 MPa, or 40-100 MPa, or 45-95 MPa, or 55-80 MPa, measured in accordance with ASTM D638.

Flex Modulus at 100% of <4 or, >0.1, or > 0.3, or > 0.7, or >1, or > 1.2, or > 1.5, or > 2, or > 2.5, or > 2.8 GPa, measured in accordance with ASTM D790

Elongation at Yield (%) of > 10%, or < 50%, or >5 %, or >15%, > 20 %, > 25%, or > 40%, or <50% measured in accordance with ASTM D412.

Elongation at break (%) of > 5%, or < 100%, or >15 %, or >20%, > 30 %, > 35%, or > 40%, or <60% measured in accordance with ASTM D412.

Notched Izod Impact (KJ/m²) of >1 KJ/m², or 2-30 KJ/m², or 3-25 KJ/m², or < 50 KJ/m², or < 40 KJ/m², < 30 KJ/m², measured in accordance with ASTM D256.

Shear viscosity (ηₒ) at 300 °C of 1.0 - 1.0⁶ Pa.S, or > 1.0 Pa.S, or < 1.0⁶ Pa.S, or 1.0-1.0² Pa.S, or 1.0³- 1.0⁴ Pa.S, or 1.0⁴- 1.0⁵ Pa.S, or 1.0³-1.0⁶ Pa.S. Rheological properties can be measured as follows: measure variation of viscosity with shear rate using a ARES parallel plate rheometer at temperature of 300 °C; measure oscillatory shear rate from 0.01 to 200 rad/sec at a constant strain of 5 %; and record complex viscosity at 200 rad/sec (highest shear in oscillatory mode).

Examples: The following illustrative examples are intended to be nonlimiting. The following test methods are used.

Polymer molecular weights can be determined by gel permeation chromatography (GPC) using polystyrene calibration standards according to ASTM 5296.

Glass transition temperature (T_{g}) is measured by Dynamic Mechanical Analysis (DMA) according to ASTM 4065.

Tensile stress-strain is measured according to ASTM D412 melt flow rates (MFR) are measured according to D1238.

The synthesis of e-SBC was characterized by proton nuclear magnetic resonance spectroscopy (1H NMR; Varian 500 MHz spectrometer, 23°C) with CD₂Cl₂ as the solvent.

The following components were used in the examples:
Ethylene Terpolymer: A random ethylene-methyl acrylate-glycidyl methacrylate terpolymer as comparative impact modifier, with 7-9 wt. % glycidyl methacrylate, 24 wt. % acrylate content, melt flow index of 4-8 g/10 min., and a melting point of 63-67 °C.
PPS resin: An unfilled semicrystalline PPS polymer consists of both amorphous and crystalline regions. The polymer exhibits a high melt temperature of 285 °C and has a glass transition temperature (T_{g}) of 90 °C, a tensile strength at break of 90 Mpa, and a flexural strength of 3800 MPa.
SEBS is a linear triblock copolymer from Kraton Corporation based on styrene and ethylene/butylene, with a polystyrene content of 13%, a melt index at 230 °C (5 kg) is 22 gm/10 min., a styrene/rubber ratio of 13/87, elongation at break of 750% (ASTM D-412).
MA-g-SEBS is a linear triblock copolymer from Kraton Corporation based on styrene and ethylene/butylene, with a polystyrene content of 30%, a vinyl content of 38 % and maleic anhydride grafted content of 1.7 wt. %.

Example 1 -Synthesizing e-pHSBC: A p-HSBC (71% hydrogenation) based on a linear triblock copolymer of styrene and ethylene/butylene (S-EB-S) with a styrene content of 30 wt. %, 35 wt. % vinyl content, and with a residual unsaturation level in the range of 2.4 mmol/g to 3.7 mmol/g was provided. The p-HSBC was dissolved in cyclohexane solvent at room temperature. In a separate step, 1.0:0.5 molar solution of formic acid and hydrogen peroxide was reacted to form a performic acid. The performic acid was added to the polymer dissolved in cyclohexane in six equal steps during the epoxidation. The formic acid level was controlled / varied to adjust the level of epoxidation. The reaction was carried out in a batch reactor operating at 50 °C, over a reaction time of 8 hours. All the reaction mixtures were immediately neutralized with 10 % of an aqueous sodium bicarbonate solution to avoid secondary reactions. The reaction mixture was washed multiple times with water to arrive at a pH of 7.5. The polymer was then precipitated in methanol, vacuum dried, washed, and analyzed by 1HNMR to determine the epoxy content. The e-pHSBC samples were obtained with epoxy graft levels of 5 wt. %, 10 wt. %, 20 wt.% and 30 wt.% respectively by weight of the rubber block.

Example 2 -Synthesizing high vinyl content e-pHSBC: A p-HSBC (82% hydrogenation) based on a linear triblock copolymer of styrene and ethylene/butylene (S-E/B-S) with a styrene content of 30 wt.%, vinyl content of 60 wt.%, and with a residual unsaturation level of 3.76 mmol/g was provided. The p-HSBC was dissolved in cyclohexane solvent at room temperature. In a separate step, 1.0:0.5 molar solution of formic acid and hydrogen peroxide was reacted to form a performic acid. Half of the performic acid solution was initially added to the p-HSBC in cyclohexane solution and the remaining portion was added after 1 hour. The formic acid level was controlled / varied to adjust the level of epoxidation. The reaction was carried out in a batch reactor operating at 60 °C, for 3 to 4 hours. All the reaction mixtures were immediately neutralized with sodium bicarbonate solution to avoid secondary reactions. The reaction mixture was washed twice with 10 % aqueous sodium bicarbonate. The polymer was precipitated in isopropyl alcohol (IPA), washed, and analysed by 1HNMR to determine the epoxy content. The e-pHSBC sample obtained with epoxy graft levels of 20 wt.% by weight of the rubber block.

Application Examples: Compounding and injection molding of the formulations in Tables 1 and 3 were carried out using a benchtop micro compounder Xplore ^{™} MC40. Typically, about 30 gm of the formulation is required to fill the extruder volume. The extruder melt temperature was maintained at 300°C during compounding, which is above the melt temperature of PPS (280 °C), and at the upper operating temperature to prevent degradation of p-HSBC impact modifiers.

A number of formulations were compounded. Unfilled formulations without talc were molded at a lower mold temperature of 88 °C, while formulations containing 2 wt. % talc was molded with a mold temperature of 150 °C. The cold mold temperature enables the quenching of the polymer blend rapidly to an amorphous state that will enhance impact strength. The hot mold temperature facilitates crystallization, which is further enhanced by adding 2 % talc as a nucleator for this condition. The injection nozzle temperature was varied between 300 °C and 320 °C, mainly to study the effect of molding temperature on mechanical properties. The injection pressure was adjusted for each formulation to optimize the specimen appearance (no delamination) and at the same time eliminate flash while molding. The injection pressure varied from 15 psi to 58 psi depending on the formulation.

Flexural bars were molded from formulations for tests according to ASTM D236.

Table 1 contains formulations of examples A1-A15 based on PPS formulations with epoxy-g-pHSBC and SEBS and maleic anhydride-g-SEBS modifiers. Table 2 describes the properties of examples A1-A15. Formulations containing epoxy-g-pHSBC show significantly higher notched Izod impact (8 kJ/m²) compared to the unmodified PPS (2.8 kJ/m²), ethylene terpolymer modified PPS (5 kJ/m²) and SEBS modified PPS (4.3 kJ/m²).

**Table 2**

| Examples | Notched Izod Impact (KJ/m²) | Flex Modulus (GPa) |
|---|---|---|
| A1 | 2.9 | 3.4 |
| A2 | 5.9 | 2.6 |
| A3 | 4.8 | 1.9 |
| A4 | 2.8 | 3.5 |
| A5 | 5.0 | 2.5 |
| A6 | 4.3 | 2.3 |
| A7 | 2.9 | 3.7 |
| A8 | 4.6 | 2.2 |
| A9 | 4.9 | 2.2 |
| A10 | 8.4 | 2.2 |
| A11 | 6.7 | 2.2 |
| A12 | 6.1 | 2.6 |
| A13 | 8.2 | 2.6 |
| A14 | 6.3 | 2.8 |
| A15 | 5.2 | 2.7 |

Table 3 describes examples B 1-B2 based on PPS formulations with epoxy-g-pHSBC and ethylene terpolymer modifiers. One set of formulation is a blend of PPS with ethylene terpolymer impact modifier, while the second set contains 2 wt. % talc in addition to the impact modifier.

Table 4 describes the properties of examples B1-B16. Notched Izod impact strength increases with increasing modifier content and is enhanced over unmodified PPS. The formulations containing the ethylene terpolymer impact modifier have notched Izod values exceeding 70 kJ/m². The flexural modulus decreases with increasing impact modifier level and is lower compared to unmodified PPS. At the same modifier level, the epoxy-g-pHSBC with 10 % epoxy functionality provides higher stiffness compared to the 5 % epoxy functionality modifier. Tensile strength decreases with higher levels of impact modifier. The tensile strength values are higher in the epoxy-g-pHSBC formulations compared to the formulation with ethylene terpolymer modifier at an equivalent impact modifier level of 20 wt. %. For formulation containing talc, Notched Izod impact strength increases with modifier loading and is enhanced over unmodified PPS (examples B7-B16). The Flexural modulus decreases with increasing levels of impact modifier, whereas Tensile strength decreases with increasing modifier loading, while elongation at break increases with higher modifier content.

**Table 4**

| Examples | Notched Izod Impact (KJ/m²) | Flex Modulus (GPa) | Tensile Strength @ Yield (MPa) | Elongation @ Yield (%) | Tensile strength @ Break (MPa) | Elongation @ Break (%) |
|---|---|---|---|---|---|---|
| B1 | 2.8 | 3.1 | 90 | 10 | 89 | 10 |
| B2 | 5.4 | 2.9 | 78 | 26 | 70 | 30 |
| B3 | 6.4 | 2.5 | 60 | 8 | 49 | 14 |
| B4 | 6.7 | 1.5 | 32 | 22 | 32 | 43 |
| B5 | 4.5 | 3.0 | 66 | 9 | 59 | 13 |
| B6 | 8.0 | 2.6 | 54 | 9 | 45 | 19 |
| B7 | 11.9 | 1.6 | 36 | 18 | 32 | 39 |
| B8 | 72.9 | 1.9 | 41 | 9 | 41 | 25 |
| B9 | 2.7 | 3.7 | 73 | 6 | 73 | 6 |
| B10 | 4.0 | 3.2 | 74 | 9 | 69 | 13 |
| B11 | 6.0 | 2.5 | - | - | 57 | 14 |
| B12 | 9.1 | 1.1 | - | - | - | - |
| B13 | 6.5 | 2.5 | 59 | 8 | 70 | 13 |
| B14 | 7.1 | 2.4 | 57 | 8 | 50 | 16 |
| B15 | 10.9 | 0.5 | - | - | - | - |
| B16 | 27.6 | 2.1 | 42 | 8 | 42 | 39 |

Table 5 describes examples C1-C2 and E1-E5 based on PPS formulations with blends of low vinyl (< 50 %) and high vinyl (> 50 %) epoxy-g-pHSBC modifiers. One set of formulation (C1) is a blend of PPS with a 100 % low vinyl modifier and another set of formulation (C2) with 100% high vinyl modifier.

**Table 5**

| Examples | C1 | E1 | E2 | E3 | E4 | E5 | C2 |
|---|---|---|---|---|---|---|---|
| PPS unfilled (wt.%) | 80 | 80 | 80 | 80 | 80 | 80 | 80 |
| 20 wt.% epoxy-g-pHSBC (wt.%)-low vinyl (< 50%) | 20 | 16 | 10 | 4 | 3 | 2 | - |
| 20 wt.% epoxy-g-pHSBC (wt.%)-high vinyl (> 50%) | - | 4 | 10 | 16 | 17 | 18 | 20 |
| IR 1010 (wt.%) | 0.1 | 0.1 | 0.1 | 0.1 | 0.1 | 0.1 | 0.1 |
| Total | 100.1 | 100.1 | 100.1 | 100.1 | 100.1 | 100.1 | 100.1 |

Table 6 describes the properties of examples C1-C2 and E1-E5. Notched Izod impact strength decreases with increasing high vinyl component. The formulation containing high vinyl modifier has notched Izod values exceeding 70 kJ/m². The notched Izod value gradually decreases from 72 kJ/m2 to ~6 kJ/m2 with decreasing amounts of high vinyl modifier from 100:0 to 0:100 for high to low modifier. Stiffness is maintained constant in all formulations except in the compound containing a 100 % high vinyl modifier. Viscosity decreases with increasing high vinyl components in the blended modifier.

**Table 6**

| Examples | Notched Izod Impact (KJ/m²) | Flex Modulus (GPa) | Viscosity @ 0.1 rad/s at 300° C | Viscosity @ 200 rad/s at 300° C |
|---|---|---|---|---|
| C1 | 72.4 | 2.01 | 4078 | 247 |
| E1 | 55.2 | 2.10 | 2571 | 197 |
| E2 | 36.3 | 2.02 | 2051 | 194 |
| E3 | 14.6 | 2.03 | 1272 | 179 |
| E4 | 12.4 | 2.09 | 915 | 157 |
| E5 | 11.0 | 2.17 | 824 | 169 |
| C2 | 6.6 | 1.52 | 786 | 150 |

Table 7 describes examples D1-D2 and F1-F3 based on PPS formulations using a combination of E-MA-GMA and epoxy-g- pHSBC. Examples D1 and D2 contain 20 % epoxy-g-pHSBC, and 20 % E-MA-GMA respectively. The formulations of example F1 to F3 have epoxy-g- pHSBC content that varies from 80 wt. % to 20 wt. % of the total modifier.

**Table 7**

| Examples | D1 | F1 | F2 | F3 | D2 |
|---|---|---|---|---|---|
| PPS unfilled (wt.%) | 80 | 80 | 80 | 80 | 80 |
| 10 wt.% epoxy-g- pHSBC | 20 | 16 | 10 | 4 | - |
| E-MA-GMA | - | 4 | 10 | 16 | 20 |
| IR 1010 (wt.%) | 0.1 | 0.1 | 0.1 | 0.1 | 0.1 |
| Total | 100.1 | 100.1 | 100.1 | 100.1 | 100.1 |
| epoxy-g-pPHSBC content in modifier (wt.%) | 100 | 80 | 50 | 20 | - |

Table 8 describes the properties of examples D1-D2 and F1 to F3. Notched Izod tests were conducted on specimens obtained from the mold portion closer to the gate (Gate end) and the portion away from the gate (Dead end). The specimens obtained away from the gate area (Dead end) show higher notched Izod values over the samples obtained near the gate area (Gate end). D1, which contains epoxy-g-pHSBC modifier shows a notched Izod value of 12 kJ/m² and a viscosity of 138 Pa.sec. On the other hand, D2 which contains E-MA-GMA modifier at 20 wt. % has a substantially high notched Izod value (59 kJ/m2) and a higher viscosity value (843 Pa.sec. measured at 200 rad/sec) compared to D1. The examples F1 to F3 with a blended composition of epoxy-g-pHSBC and E-MA-GMA have lower viscosity, and a high impact strength. F1, which contains 80 wt.% epoxy-g-pHSBC in the total modifier wt. %, has notched Izod value of 45 kJ/m² almost 4 times higher than D1. The F1 viscosity (347 Pa.sec at 200 rad/sec) is also higher than the viscosity of D1 (138 Pa.sec at 200 rad/sec).

**Table 8**

| Examples | Notched Izod Impact (KJ/m²) (Dead end) | Notched Izod Impact (KJ/m²) (Gate end) | Flex Modulus (GPa) | Tensile strength at break (MPa) | Elongation at break (%) | Viscosity @ 200 rad/s at 300° C (Pa. sec) |
|---|---|---|---|---|---|---|
| D1 | 12 | 7 | 2.1 | 54 | 9 | 138 |
| F1 | 45 | 32 | 2.0 | 36 | 23 | 347 |
| F2 | 42 | 21 | 2.0 | 36 | 25 | 612 |
| F3 | 60 | 40 | 2.0 | - | - | 792 |
| D2 | 59 | 43 | 1.9 | 35 | 51 | 843 |

Rheology data: Rheology experiments were run at 300 °C, with frequency ranging from 0.01 rad/s to 200 rad/s and a constant strain of 5 %. Complex viscosity data was obtained at each frequency. The calculated zero shear viscosity (ηₒ) values for various formulations containing 20 wt. % modifier is shown in Table 9 below. The comparative formulation of ethylene terpolymer has a higher zero shear viscosity as compared to the formulations containing epoxy-g-pHSBC, SEBS and MA-g-SEBS modifiers. Zero shear viscosity (η₀ₒ) can be calculated from five parameters in the Carreau-Yasuda (1) model, which is of the form: η=η_{inf} + (η₀-η_{inf})/(1+(τγ)^{a})^{(1-n)/a} where η is the experimentally measured complex viscosity at a specified shear rate, ηₒ is the zero shear viscosity, η_{inf} is infinite shear viscosity, τ is a relaxation time, γ applied shear rate, n and a are constants.

**Table 9**

| Modifier (20 %) | ηₒ (Pa.sec) |
|---|---|
| PPS | 5.6E+02 |
| MA-g-SEBS | 7.8E+04 |
| SEBS | 2.4E+03 |
| 5% epoxy pHSBC | 4.2E+03 |
| 10 % epoxy pHSBC | 9.3E+04 |
| Ethylene Terpolymer | 1.0E+06 |

The calculated zero shear viscosity (ηₒ) for the various formulations is shown in Table 9 above. The ethylene terpolymer based formulation has a value of 10⁶ Pa. sec. compared to 4.2 ×10³ Pa. sec for the 5 % epoxy functionality-based p-HSBC modifier and 9.3 × 10⁴ for the 10 % epoxy functionality-based p-HSBC modifier respectively. This increase in zero shear viscosity is 2 to 3 orders of magnitude with the ethylene terpolymer based compound and is indicative of the reduced processability. Higher epoxy functionality in the epoxy-g-PHSBC also increases the viscosity as seen in Table 9, not to the same extent as the formulation containing ethylene terpolymer.

Although the terms "comprising" and "including" have been used herein to describe various aspects, the terms "consisting essentially of" and "consisting of" can be used in place of "comprising" and "including" to provide for more specific aspects of the disclosure and are also disclosed.

**Table 1**

| Examples | A1 | A2 | A3 | A4 | A5 | A6 | A7 | A8 | A9 | A10 | A11 | A12 | A13 | A14 | A15 |
|---|---|---|---|---|---|---|---|---|---|---|---|---|---|---|---|
| PPS unfilled (wt.%) | 99.9 | 79.9 | 79.9 | 99.9 | 79.9 | 79.9 | 97.9 | 78.4 | 78.4 | 79.9 | 78.4 | 78.4 | 79.9 | 78.4 | 78.4 |
| MA-g-SEBS | | 20 | | | 20 | | | 19.5 | | | | | | | |
| SEBS | | | 20 | | | 20 | | | 19.5 | | | | | | |
| 5wt% epoxy-g- pHSBC (wt.%) | | | | | | | | | | 20 | 19.5 | 19.5 | | | |
| 10 wt.% epoxy-g-pHSBC (wt.%) | | | | | | | | | | | | | 20 | 19.5 | 19.5 |
| Talc (wt.%) | - | - | - | - | - | - | 2.0 | 2 | 2 | | 2.0 | 2.0 | | 2 | 2 |
| IR 1010 (wt.%) | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Total | 100 | 100 | 100 | 100 | 100 | 100 | 100.0 | 100 | 100 | 100 | 100 | 100 | 100 | 100 | 100 |

**Table 3**

| Examples | B1 | B2 | B3 | B4 | B5 | B6 | B7 | B8 | B9 | B10 | B11 | B12 | B13 | B14 | B15 | B16 |
|---|---|---|---|---|---|---|---|---|---|---|---|---|---|---|---|---|
| PPS unfilled (wt.%) | 100 | 89.9 | 79.9 | 69.9 | 89.9 | 79.9 | 69.9 | 79.9 | 97.9 | 87.9 | 77.9 | 67.9 | 87.9 | 77.9 | 67.9 | 77.9 |
| 5wt% epoxy-g- pHSBC (wt.%) | | 10 | 20 | 30 | | | | | | 10 | 20 | 30 | | | | |
| 10wt.% epoxy-g-pHSBC (wt.%) | | | | | 10 | 20 | 30 | | | | | | 10 | 20 | 30 | |
| Ethylene Terpolymer (wt.%) | | | | | | | | 20 | | | | | | | | 20 |
| Talc (wt.%) | - | - | - | - | - | - | - | - | 2.0 | 2.0 | 2.0 | 2.0 | 2.0 | 2.0 | 2.0 | 2.0 |
| IR 1010 (wt.%) | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| Total | 100 | 100 | 100 | 100 | 100 | 100 | 100 | 100 | 100 | 100 | 100 | 100 | 100 | 100 | 100 | 100 |

## Claims

1. A polyphenylene sulfide composition comprising:
a) 60 to 98 wt. % of a polyphenylene sulfide;
b) 2 to 40 wt. % of a first epoxidized styrenic block copolymer (e-SBC);
wherein the first epoxidized styrenic block copolymer is obtained by epoxidizing a styrenic block copolymer (SBC) precursor having a general configuration selected from A-B, A-B-A, A-B-A-B, (A-B-A)ₙX, (A-B)ₙX, and mixtures thereof:
each block A is at least one monoalkenyl arene polymer block,
each block B is at least one conjugated diene polymer block,
x is residual of a coupling agent, and
n ≥ 1; and
wherein after epoxidation, the block B is epoxidized at aliphatic double bonds for the epoxidized styrenic block copolymer to have 1 to 35 wt.% of epoxy functional groups based on the weight of the block B; and
wherein the first epoxidized styrenic block copolymer has a residual unsaturation (RU) of 0.05 - 20 mmol/g; and
c) up to 45 wt.% of an optional impact modifier; and
d) up to 10 wt. % of at least an additive.

2. The polyphenylene sulfide composition of claim 1, wherein the styrenic block copolymer (SBC) precursor is hydrogenated to form a hydrogenated styrenic block copolymer precursor having a hydrogenation level of at least 97%.

3. The polyphenylene sulfide composition of claim 1, wherein the styrenic block copolymer (SBC) precursor is partially hydrogenated to form a partially hydrogenated styrenic block copolymer precursor having a hydrogenation level of 15-97%.

4. The polyphenylene sulfide composition of claim 3, wherein the partially hydrogenated styrenic block copolymer precursor has a vinyl content of 6-80 %.

5. The polyphenylene sulfide composition of any of claims 1-3, wherein the composition further comprises a second epoxidized styrenic block copolymer (e-SBC), wherein the second e-SBC is different than the first e-SBC.

6. The polyphenylene sulfide composition of claim 5, wherein the first and second e-SBCs are formed from epoxidizing partially hydrogenated styrenic block copolymer precursors.

7. The polyphenylene sulfide composition of claim 5, wherein the first and second epoxidized styrenic block copolymer (e-SBC), has a degree of epoxidation of 15-99 %.

8. The polyphenylene sulfide composition of any of claims 1-3, wherein the styrenic block copolymer (SBC) precursor has a polystyrene content (PSC) of 10-40%.

9. The polyphenylene sulfide composition of any of claims 1-3, wherein the styrenic block copolymer (SBC) precursor contains block A having a molecular weight Mₚ of 1 to 150 kg/mol, and block B having a molecular weight of Mₚ of 2 - 350 kg/mol.

10. The polyphenylene sulfide composition of any of claims 1-3, wherein the styrenic block copolymer (SBC) precursor has a molecular weight Mₚ of 50 -500 kg/mol.

11. The polyphenylene sulfide composition of any of claims 1-3, wherein the e-SBC contains 5-70 % of monoalkenyl arene, and 30-95 wt. % of conjugated diene as copolymerized units prior to hydrogenation.

12. The polyphenylene sulfide composition of any of claims 1-3, wherein the polyphenylene sulfide is selected from a low molecular weight polyphenylene sulfide, a high molecular weight polyphenylene sulfide, and mixtures thereof.

13. The polyphenylene sulfide composition of claim 12, wherein the low molecular weight polyphenylene sulfide has an average molecular weight (MW_{w}) of 2- 40 kg/mol.

14. The polyphenylene sulfide composition of claim 12, wherein the high molecular weight polyphenylene sulfide has an average molecular weight (MW_{w}) of 55- 150 kg/mol.

15. The polyphenylene sulfide composition of claim 1, wherein the composition is characterized as having at least one of
a notched Izod impact of 2-30 KJ/m² at 23° C measured according to ASTM D256;
a tensile strength at break of 20-150 MPa measured according to ASTM D638;
a flex modulus at 100% of < 4 GPa measured according to ASTM D790;
an elongation at yield (%) of > 10% measured according to ASTM D412;
an elongation at break (%) of > 5% measured according to ASTM D412; and
a shear viscosity (ηₒ) of 1.0- 1.0⁶ Pa.S measured at 300 °C based on ARES rheometer and recorded at 200 rad/sec.
